# EUROPEAN PATENT APPLICATION

(11) **EP 2 000 936 A1**
(43) Date of publication of application: **10.12.2008**
(21) Application number: 07301069.6
(22) Date of filing: 29.05.2007
(51) Int. Cl.: G06F 21/00

(54) **Electronic token comprising several microprocessors and method of managing command execution on several microprocessors**

(71) Applicant: GEMPLUS, 13420 Gémenos (FR)
(72) Inventor: CHAN, Keng Kun, 680443, SINGAPORE (SG); ZHANG, Jian, 53426, SINGAPORE (SG); CHAN-JT, Michael, 320077, SINGAPORE (SG)

(57) **Abstract**

The invention is a method of managing application (AP) execution in an electronic token (ET) comprising at least a first and a second microprocessors (MP1, MP2). One of the microprocessor is the master microprocessor when it has responsibility for application (AP) execution. Said method comprises the step of: selecting (E1) the first microprocessor as master microprocessor, then the step of starting (E2) application (AP) execution by the first microprocessor, then the step of transferring (E4, E12) the responsibility for application (AP) execution to the second microprocessor during the application (AP) execution.

## Description

### (Field of the invention)

The present invention relates to electronic token comprising several microprocessors and method of managing command execution on several microprocessors. It relates particularly to methods of managing application execution where time measurement constraints are strong and high security level is required, for example with a smart card.

### (Prior art)

The majority of smart cards have only one embedded microprocessor. For example, SIM telephone subscriber cards or credit cards are electrically connected during operation to terminals such as mobile phones or readers. These cards exchange, with terminals, data according to dedicated communication protocols such as ISO standard 7816-3. Exchanged data is treated by the microprocessor of these cards.

In order to increase the available features of an electronic token, several microprocessors may be embedded in a unique token. A token containing several microprocessors is described in the WO02058004 patent application where a smart card comprises several interconnected microprocessors. In this case, security of the token is built by the combination of two parts. On the one hand smart card microprocessors are designed with usual security features and on the other hand communications betweens interconnected microprocessors may be protected by authentication mechanism or ciphering of exchanged data. The same situation may occur with a chip comprising several microprocessors.

However a malicious person may focus on a targeted microprocessor activity in order to set up an attack. Some applications executed by an electronic token may require a higher security level. In particular, execution of these applications must be tamper resistant even against attack that stresses a given microprocessors.

### (Summary of the Invention)

The invention aims at increasing resistance against attack during execution of applications on an electronic token comprising several interconnected chips or microprocessors. The electronic token may be a smart card, a mobile phone, a walkman or a memory token.

The object of the present invention is a method of managing application execution in an electronic token comprising several microprocessors. In particular embedded microprocessors may be interconnected or linked to each other.

The object of the present invention is a method of managing application execution in an electronic token. The token comprises at least first and second microprocessors. One of the microprocessor is the master microprocessor when it has responsibility for the application execution. Said method comprises the step of selecting the first microprocessor as master microprocessor, the step of starting application execution by the first microprocessor, and the further step of transferring the responsibility for application execution to the second microprocessor during the application execution.

The token may have means for generating dummy tasks. The master microprocessor having responsibility for application execution may perform at least an additional dummy task during the application execution.

The executed application may comprise at least two tasks. The master microprocessor having responsibility for application execution may delegate a one task execution to another microprocessor during the application execution.

The application execution may use a set of incoming parameters. The master microprocessor having responsibility for application execution may start at least two application execution instances, each instance having its own set of incoming parameters.

The master microprocessor having responsibility for a first application execution may start a second application execution during the first application execution.

Before the step of transferring the responsibility for application, a mutual authentication may be performed between the microprocessors and/or a secured session may be established between the microprocessors.

The master microprocessor having responsibility for application execution may be selected randomly or according to a predefined sequence.

At least two tasks may be executed in parallel by several microprocessors, in particular by two different microprocessors.

Another object of the invention is an electronic token comprising at least first and second microprocessors) and a memory that contains an application wherein, when the application execution is started by a first microprocessor having the responsibility for application execution, the responsibility for application execution is transferred to a second microprocessor during the application execution.

In the electronic token, every microprocessor may belong to its own chip.

In the electronic token, the chips may be connected to a common bus or connected in series

The chips may communicate with a protocol according to ISO 7816, USB or MMC standards.

The electronic token may be a smart card, a mobile phone, a walkman or a memory token.

The chips may communicate with ISO 7816 protocol and through a dedicated pin (CS) such as the N/C pin.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically a first type of connection between microprocessors in an electronic token according to the invention;
- Figure 2 depicts schematically a second type of connection between microprocessors in an electronic token according to the invention;
- Figure 3 depicts schematically the architecture of an electronic token of smart card type according to the invention;

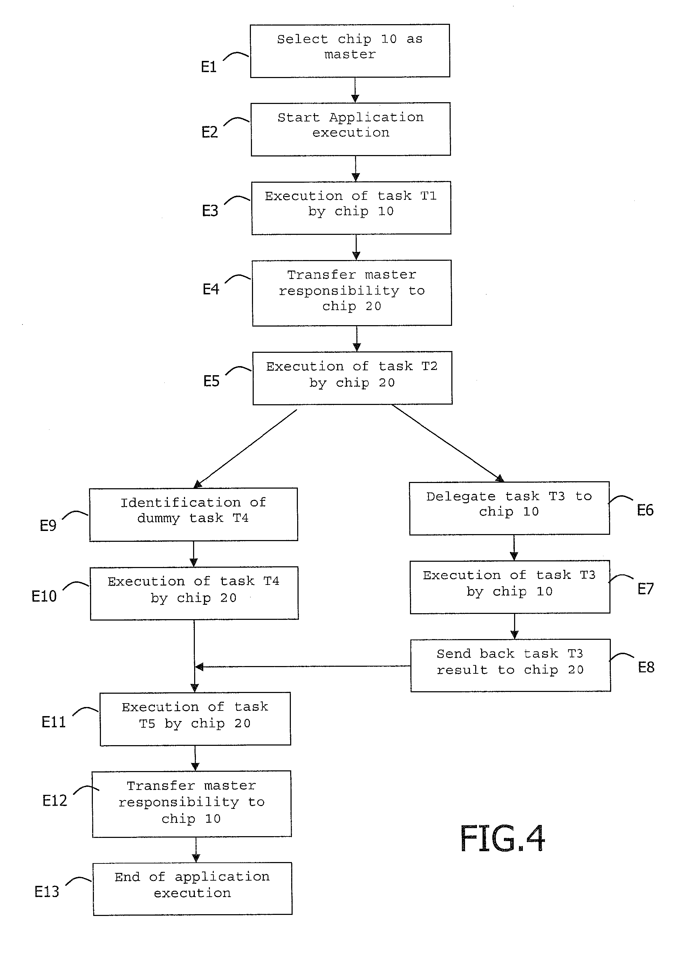

- Figure 4 is an algorithm for managing application execution according to the invention; and
- Figure 5 depicts schematically an example of link between microprocessors pins according to the invention.

### (Detailed description of the preferred embodiments)

The invention may apply to any types of electronic token comprising several microprocessors or chips. In this specification, the electronic token is a smart card but it could be any kind of smart cards or portable devices able to execute an application.

An advantage of the invention is to allow execution of an application in a secure and efficient environment. An external observer which is malevolent cannot know which microprocessor carries out which treatment at every moment.

Besides the transfer of master responsibility from a microprocessor to another one may be randomly performed during the application execution. This kind of transfer allows having a unique token that can execute a same application by using different physical configurations each time the application execution is performed. Thus when an application is executed several times on the same token, the used microprocessor are different from an execution to another one, the power signature is different from an execution to another one. As a result the invention provides a secure framework allowing enhancing security of application execution on an electronic token.

Moreover tasks execution may be delegated on several microprocessors in parallel and/or in series. Such a delegation of tasks allows to perform several treatments at the same time and to reduce time execution.

Such a delegation of tasks allows performing additional useless tasks that can be executed in the same time as essential tasks. These useless tasks are called dummy tasks. Execution of dummy tasks masks execution of the critical tasks for a potential hacker.

When more than one microprocessor are running with different master microprocessor that lead at different time to perform application execution, an external observer is provided with a confusion scenario. Thus difficulty for identifying the real microprocessor working on a sensitive process is dramatically increased.

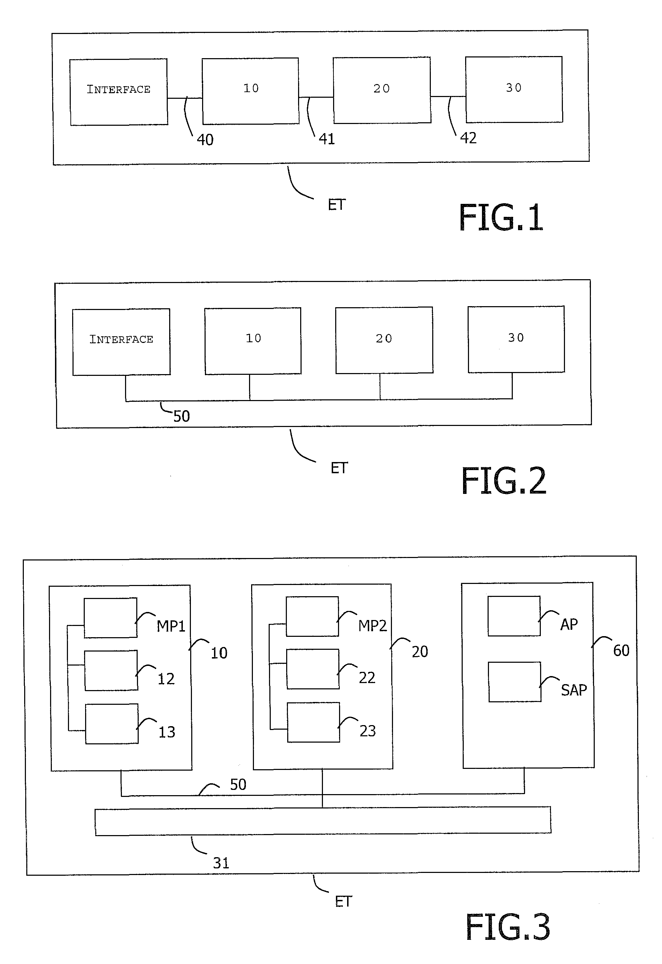

As shown in Figure 1, microprocessors may be assembled in series in the electronic token. A first chip 10 is connected to a communication interface via a first link 40. A second chip 20 is connected to the chip 10 via a second link 41. A third chip 30 is connected to the chip 30 via a third link 42. Every chip contains its own microprocessor.

Another connection system is shown in Figure 2. All chips 10, 20 and 30 are connected to a unique bus 50. The communication interface is also linked to the bus 50.

Figure 3 shows the architecture of a smart card as an example of an electronic token according to a preferred embodiment of the invention. The smart card ET comprises two chips 10 and 20, a non volatile memory 60, a communication interface 31 and a bus 50. The two chips 10 and 20, the memory 60 and the communication interface 31 are connected to the bus 50.

The memory 60 comprises a first application AP and a second application SAP.

The chip 10 comprises a microprocessor MP1, a RAM memory 12 and an EEPROM memory 13. The chip 20 comprises a microprocessor MP2, a RAM memory 22 and a EEPROM memory 23.

As part of the invention, the master wording may be used for either chip or microprocessor.

An application execution may be launched by either a host connected to the electronic token or a user through a dedicated interface like an embedded keyboard for example. When an application execution is going to start, the first step E1 is the selection of the master chip among the two available chips 10 and 20. This selection may be predefined or made randomly. In particular, a dedicated random logic may be embedded in the token. This random logic allows selecting a master chip at random.

Alternatively, every chip may generate a random number and the chip that has generated the lowest or the highest number is considered as the master. When one chip is selected as master it send a dedicated message to others chips to inform the rest of the chips that it is the master and the other chips are slaves.

Then application execution is started on the master chip during the second step E2.

An application comprises a set of tasks. For example an APDU (Application Protocol Data Unit) command received by a smart card may correspond to one task. At the third step E3, the first task T1 is executed on the master chip. Then the master chip selects in a random or predefined way another chip that will become the master chip for the application execution. The master responsibility is transferred to the chip 20 during the step E4. From this moment chip 20 has the full responsibility for the application execution. Chip 20 may keep the master responsibility for the entire remaining part of the application execution. Alternatively, Chip 20 may transfer again the master responsibility after a partial application execution.

Then chip 20 executes the second task T2 at the step E5. From this point chip 20 starts two treatments in parallel. The first treatment corresponds to the delegation E6 of task T3 execution to the chip 10. Chip 10 is seen as a slave by chip 20. Chip 10 will execute task T3 during step E7 and send back the task T3 result to the master chip 20 at step E8.

While steps E7 up to E8 are performed, chip 20 identify a dummy task T4 during a step E9 then perform the execution of task T4 at step E10.

Then master chip 20 gets the task T3 result and goes on application execution. The task T5 is executed by the chip 20 at step E11. Then at step E12 the master responsibility is transferred to chip 10. Finally the remaining tasks are executed by chip 10 and the end of the application execution is reached at step E13.

Alternatively the first master chip may be different from the final master chip. In the previous example, chip 20 may keep the master responsibility until the end of the application execution.

Executed dummy tasks may be selected in a predefined set of tasks. Alternatively the master chip may comprise means able to generate dummy task.

The dummy tasks selection may be performed randomly or according to a predefined sequence.

Alternatively, dummy tasks may correspond to the partial or full execution of the same application with a set of incoming parameters different from the parameters used for the true application execution. With this kind of dummy tasks, the same application in run several times in parallel with different input data.

In one other example, dummy tasks may correspond to the partial or full execution of a second application SAP different from the first true application AP.

In an alternative way, dummy tasks execution may start before tasks execution of the true application.

Alternatively, a mutual authentication is performed between the microprocessors MP1, MP2 and/or a secured session is established between the microprocessors MP1, MP2 before the step of transferring E4, E12 the master responsibility for application or before the step of delegating E6 a task execution.

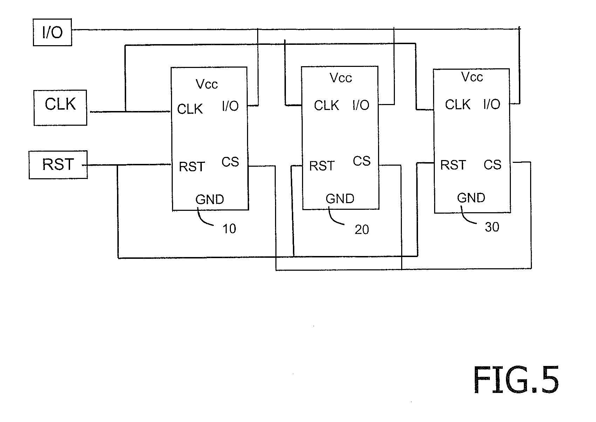

Figure 5 shows example of link between microprocessors pins according to the invention. All chips may be connected through a dedicated pin CS such as the N/C pin or another available pin. The link to the Vcc pin is not showed on the figure. When the power is not directly supplied by the token itself, the host which is connected to the token must provide the relevant power for all chips of the token.

In addition chips may be arranged in a three dimensional system. For example, the chip modules may be mounted on at least two different sides of a rod.

Synchronization of tasks between several chips may be managed through an additional byte called assignment byte AB. Such an assignment byte AB may be send at the end of each instruction set. An instruction set may correspond to an APDU command.

Upon reset or boot up, all the connected chips may generate an assignment byte AB value. The value for the assignment byte AB may generate using a same secret key which has been previously made available for every chip. For example, the current time may be used as input data in combination with the same secret key for computing a pseudo-random result. Said pseudo-random may be masked with a predefined value in order to get a second result in a range [1 ... n], where n is the number of connected chips. Assuming that every connected chips is defined by its rank, said second result allows defining the master chip as the chip having a rank equal to the second result. Then the master chip may communicate via the CS line that it is the master and the rest of connected chips are slave. Then an instruction set may be either sent to a slave chip to process or processed by the master chip.

Then, in a first embodiment, the master chip may generate a new assignment byte AB value and send it via the CS line. Depending of the new generated assignment byte AB value, the master responsibility is either transferred to another connected chip or kept by the master chip.

In a second embodiment, all connected chips compute each time the assignment byte AB. The computed assignment byte AB value is the same for all connected chips.

By arraying multiple chips, parallel processing and threading is possible, thence empowering computationally intensive processes that are deemed infeasible for traditional electronic token. The Diffie-Hellman Algorithm corresponds to the algorithm: M^a mod P, where "^" is the "to the power of" function. P is a prime number. "a" is a random number. P and "a" values need to be generated. M is a constant.

An example of Diffie-Hellman algorithm implementation according to the invention may use three chips. Each chip has a "P" and a "a" register for storing the P and "a" values. As initial state, P and "a" values are only generated and stored in the 1st chip. During a first step, the second chip is selected to become the master chip. The first and third chips are slaves. An Update Binary APDU command is received by the token. The second chip performs the Updated Binary command. In the same time, the third chip generates the P value and stores it in the relevant register. The first chip remains unemployed. At the end of this step, the first chip is ready for the Diffie-Hellman algorithm execution. The first chip may send a dedicated signal for indicating readiness, like "100" for example. While there is no readiness, other chips may send another dedicated signal for indicating "no readiness", like "000"

During a second step, the first chip is selected to become the master. A Read Binary APDU command is received by the token. The first chip performs the Read Binary command. In the same time, the third chip generates the "a" value and stores it in the relevant register. Concurrently, the second chip generates the P value and stores it in the relevant register. At the end of this second step, the first and third chips are ready for the Diffie-Hellman algorithm execution.

During a third step, a Run Diffie-Hellman algorithm command is received by the token. Either the first or the third chips may be selected as the master to compute the algorithm because they are both ready. Assuming the third chip is selected to become the master, the Diffie-Hellman algorithm is computed by the third chip. The token performance is improved as compare to a traditional smart card since. After the Run Diffie-Hellman receipt, the master chip did not need to generate the P and "a" value before computing algorithm result. Then the third chip clears the P and "a" registers after algorithm computation. In this case the third chip is no longer ready for the Diffie-Hellman algorithm execution.

## Claims

1. A method of managing application (AP) execution in an electronic token (ET), said token (ET) having at least a first and a second microprocessors (MP1, MP2), one of the microprocessor being the master microprocessor when it has responsibility for application (AP) execution, said method comprises the following steps:
- selecting (E1) the first microprocessor as master microprocessor,
- starting (E2) application (AP) execution by the first microprocessor,
**characterized in that** said method comprises the further step of transferring (E4, E12) the responsibility for application (AP) execution to the second microprocessor during the application (AP) execution.

2. A method according to claim 1, wherein the microprocessor having responsibility for application (AP) execution has means for generating dummy tasks and wherein at least an additional dummy task is performed during the application (AP) execution.

3. A method according to claim 1 or 2, the application (AP) execution comprising at least a first and a second tasks (T1, T2, T3), wherein the microprocessor having responsibility for application (AP) execution delegates a first task (T3) execution to another microprocessor during the application (AP) execution.

4. A method according to claim 1, 2 or 3, the application (AP) using a set of incoming parameters, wherein said method comprises the following additional step:
- the microprocessor having responsibility for application (AP) execution starts at least two application (SAP) execution instances, each instance having its own set of incoming parameters.

5. A method according to claim 1, 2, 3 or 4, wherein the microprocessor having responsibility for a first application (AP) execution starts a second application (SAP) execution during the first application (AP) execution.

6. A method according to claim 1, 2, 3, 4 or 5, wherein said method comprises the following additional step before the step of transferring (E4, E12) the responsibility for application (AP):
- a mutual authentication is performed between the microprocessors and/or a secured session is established between the microprocessors.

7. A method according to claim 1 , 2, 3, 4, 5 or 6, wherein the microprocessor having responsibility for application (AP) execution is selected randomly or according to a predefined sequence.

8. A method according to claim 3, wherein the first and second tasks (T1, T2, T3) are executed in parallel by two microprocessors.

9. An electronic token (ET) containing
- at least a first and a second microprocessors (MP1, MP2),
- a memory (60) containing an application (AP),
said token (ET) being **characterized in that**, when the application (AP) execution is started by a first microprocessor having the responsibility for application (AP) execution, the responsibility for application (AP) execution is transferred to a second microprocessor during the application (AP) execution.

10. An electronic token (ET) according to claim 9, wherein each microprocessor (MP1, MP2) belongs to its own chip (10, 20).

11. An electronic token (ET) according to claim 10, wherein the chips (10, 20, 30) are connected to a common bus (50).

12. An electronic token (ET) according to claim 10, wherein the chips (10, 20, 30) are connected in series.

13. An electronic token (ET) according to claim 10, 11 or 12, wherein the chips (10, 20, 30) communicate with a protocol according to ISO 7816, USB or MMC standards.

14. An electronic token (ET) according to claim 9, 10, 11, 12 or 13, **characterized in that** the token (ET) is a smart card, a mobile phone, a walkman or a memory token.

15. An electronic token (ET) according to claim 10, 11 or 12, wherein the chips (10, 20, 30) communicate with ISO 7816 protocol and through a dedicated pin (CS) such as the N/C pin.
